# EUROPÄISCHE PATENTSCHRIFT

(11) **EP 2 138 910 B1**
(45) Veröffentlichungstag und Bekanntmachung des Hinweises auf die Patenterteilung: **13.05.2020**
(21) Anmeldenummer: 09168963.8
(22) Anmeldetag: 11.11.2003
(51) Int. Cl.: G03H 1/22, G03H 1/08

(54) **Einrichtung zur Rekonstruktion von Videohologrammen**
Device for reconstructing video holograms
Dispositif de reconstruction d'hologrammes video

(30) Priorität: 13.11.2002 DE 10253292
(43) Veröffentlichungstag der Anmeldung: 30.12.2009
(62) Teilanmeldung aus: 03788795.7
(73) Patentinhaber: SeeReal Technologies GmbH, 01099 Dresden (DE)
(72) Erfinder: Schwerdtner, Armin, 01259 Dresden (DE)
(74) Vertreter: Helbig, Nicole

(56) Entgegenhaltungen:
- GB-A- 2 363 273
- US-A- 5 798 864
- TRAVIS L: "The Display of Three-Dimensional Video Images", PROCEEDINGS OF THE IEEE, IEEE. NEW YORK, US, Bd. 85, Nr. 11, 1. November 1997 (1997-11-01), XP011043924, ISSN: 0018-9219, DOI: 10.1109/5.649659
- HIROSHI YOSHIKAWA ET AL: "Full Color Computer-Generated Rainbow Hologram with Enlarged Viewing Angle", OPTICAL REVIEW, SPRINGER, BERLIN, DE, Bd. 9, Nr. 6, 1. November 2002 (2002-11-01), Seiten 251-254, XP019353974, ISSN: 1349-9432, DOI: 10.1007/S10043-002-0251-5
- ST HILAIRE P ET AL: "SYNTHETIC APERTURE HOLOGRAPHY: A NOVEL APPROACH TO THREE-DIMENSIONAL DISPLAYS", JOURNAL OF THE OPTICAL SOCIETY OF AMERICA A, OPTICAL SOCIETY OF AMERICA, US, Bd. 9, Nr. 11, 1. November 1992 (1992-11-01), Seiten 1969-1977, XP000310714, ISSN: 1084-7529
- LESEBERG D: "SIZABLE FRESNEL-TYPE HOLOGRAM GENERATED BY COMPUTER", JOURNAL OF THE OPTICAL SOCIETY OF AMERICA A, OPTICAL SOCIETY OF AMERICA, US, Bd. 6, Nr. 2, 1. Februar 1989 (1989-02-01) , Seiten 229-233, XP000027259, ISSN: 1084-7529
- J. L. JUÁREZ-PÉREZ ET AL: "Nonredundant calculations for creating digital Fresnel holograms", APPLIED OPTICS, Bd. 36, Nr. 29, 10. Oktober 1997 (1997-10-10), Seite 7437, XP55006369, ISSN: 0003-6935, DOI: 10.1364/AO.36.007437
- N. A. DODGSON: "Analysis of the viewing zone of the Cambridge autostereoscopic display", APPLIED OPTICS, Bd. 35, Nr. 10, 1. April 1996 (1996-04-01) , Seite 1705, XP55006144, ISSN: 0003-6935, DOI: 10.1364/AO.35.001705
- TRAVIS A R L: "AUTOSTEREOSCOPIC 3-D DISPLAY", APPLIED OPTICS, OPTICAL SOCIETY OF AMERICA, WASHINGTON, DC; US, Bd. 29, Nr. 29, 10. Oktober 1990 (1990-10-10), Seiten 4341-4343, XP000148722, ISSN: 0003-6935, DOI: 10.1364/AO.29.004341
- M. PARKER GIVENS: "Introduction to Holography", AMERICAN JOURNAL OF PHYSICS, Bd. 35, Nr. 11, 1. November 1967 (1967-11-01), Seiten 1056-1064, XP55006413, DOI: http://dx.doi.org/10.1119/1.1973727
- LUCENTE M ET AL: "RENDERING INTERACTIVE HOLOGRAPHIC IMAGES", COMPUTER GRAPHICS PROCEEDINGS. LOS ANGELES, AUG. 6 - 11, 1995; [COMPUTER GRAPHICS PROCEEDINGS (SIGGRAPH)], NEW YORK, IEEE, US, 6. August 1995 (1995-08-06), Seiten 387-394, XP040080713, ISBN: 978-0-89791-701-8
- JENDRAL A ET AL: "SYNTHETIC NEAR-FIELD HOLOGRAMS WITH LOCALIZED INFORMATION", OPTICS LETTERS, OPTICAL SOCIETY OF AMERICA, US, vol. 20, no. 10, 15 May 1995 (1995-05-15), pages 1204-1206, XP000512203, ISSN: 0146-9592
- LESEBERG D: "COMPUTER-GENERATED THREE-DIMENSIONAL IMAGE HOLOGRAMS", APPLIED OPTICS, OPTICAL SOCIETY OF AMERICA, WASHINGTON, DC; US, vol. 31, no. 2, 10 January 1992 (1992-01-10), pages 223-229, XP000246871, ISSN: 0003-6935, DOI: 10.1364/AO.31.000223

## Beschreibung

Die Erfindung betrifft ein Verfahren und eine Einrichtung zur Rekonstruktion von Videohologrammen mit einem optischen System, bestehend wenigstens aus einer Lichtquelle, einer Linse und dem Videohologramm aus matrixförmig oder in anderer Weise regulär angeordneten Zellen mit mindestens einer in Amplitude und/oder Phase steuerbaren Öffnung je Zelle sowie einer Betrachterebene am Ort des Lichtquellenbildes.

Es sind Einrichtungen zur Rekonstruktion von Videohologrammen mit akustooptischen Modulatoren (AOM) bekannt (Stephen A. Benton, Joel S. Kollin: Three dimensional display system, US 5,172,251). Diese akustooptischen Modulatoren wandeln elektrische Signale in optische Wellenfronten um, die dann durch Ablenkspiegel zu zweidimensionalen holografischen Flächen innerhalb eines Videoframes zusammengesetzt werden. Die Wellenfronten werden über weitere optische Elemente als eine für den Betrachter sichtbare Szene rekonstruiert. Die verwendeten optischen Mittel, wie Linsen und Ablenkelemente, haben die Ausdehnung der rekonstruierten Szenen und sind mit ihrer großen Bautiefe voluminös und schwer. Sie lassen sich kaum miniaturisieren und sind daher in ihrem Anwendungsbereich beschränkt.

Eine andere Möglichkeit, große Videohologramme zu erzeugen, bietet das sogenannte Tiling-Verfahren mit Computer Generierten Hologrammen (CGH). Nach diesem aus WO 00/75698 A1 und US 6,437,919 B1 bekannten Verfahren werden kleine CGHs mit kleinem Pitch über eine Abbildungsoptik zusammengesetzt. Dafür werden in einem ersten Schritt schnelle Matrizen mit kleinem Pitch (in der Regel EASLM: Elektronisch Adressierbare Spatiale Licht-Modulatoren) mit der nötigen Information beschrieben, auf ein holografisch geeignetes Medium abgebildet und zu einem größeren Videohologramm zusammengesetzt. Das verwendete Medium ist in der Regel ein Optisch Adressierbarer Spatialer Licht-Modulator (OASLM). In einem zweiten Schritt wird das zusammengesetzte Videohologramm mit kohärentem Licht in Transmission oder Reflexion rekonstruiert.

Bei den beispielsweise aus WO 01/95016 A1 oder Fukaya u.a. "Eye-position tracking type electro-holographic display using liquid crystal devices", Proceedings of EOS Topical meeting on Diffractive Optics, 1997, bekannt gewordenen CGH mit matrixförmigen oder auf andere Weise regulär angeordneten steuerbaren Öffnungen wird die Beugung an kleinen Öffnungen für die Kodierung der Szenen angewendet. Die von den Öffnungen ausgehenden Wellenfronten konvergieren in Objektpunkten der dreidimensionalen Szene, bevor sie den Betrachter erreichen. Je kleiner der Pitch und damit die Größe der Öffnungen in den CGH ist, umso größer ist der Beugungswinkel, also der Betrachterwinkel. Eine Vergrößerung des Betrachterwinkels bedeutet bei diesen bekannten Verfahren daher eine Vergrößerung der Auflösung.

Bei Fourierhologrammen findet bekanntlich die Rekonstruktion in eine Ebene als direkte oder inverse Fouriertransformierte des Hologramms statt. Diese Rekonstruierte setzt sich periodisch mit einem Periodizitätsintervall fort, dessen Ausdehnung umgekehrt proportional zum Pitch im Hologramm ist.

Wenn die Ausdehnung der Rekonstruierten des Fourierhologramms größer als das Periodizitätsintervall ist, überlappen sich benachbarte Beugungsordnungen. Mit zunehmender Verringerung der Auflösung, also wachsendem Pitch der Öffnungen, werden die Ränder der Rekonstruierten durch Überlappung aus den höheren Beugungsordnungen zunehmend gestört. Die nutzbare Rekonstruktion wird dadurch in ihrer Ausdehnung mehr und mehr eingeschränkt.

Will man größere Periodizätsintervalle und damit also größere Betrachterwinkel erzielen, nähert sich der erforderliche Pitch im Hologramm der Lichtwellenlänge. Um dann möglichst große Szenen darstellen zu können, müssen aber auch die CGH entsprechend groß sein. Beide Forderungen verlangen ein großes CGH mit sehr vielen Öffnungen, das in Form von Displays mit steuerbaren Öffnungen gegenwärtig nicht realisierbar ist (s. EP 0 992 163 B 1). CGH mit steuerbaren Öffnungen sind daher nur ein oder wenige Zoll groß, wobei die Pitches noch erheblich über 1 µm liegen.

Beide Parameter, Pitch und Hologrammgröße, werden durch das sogenannte Space-Bandwith-Produkt (SBP) als Anzahl der Öffnungen im Hologramm beschrieben. Soll die Rekonstruktion von einem CGH mit steuerbaren Öffnungen mit 50 cm Breite so erfolgen, dass ein Betrachter die Szene im Abstand von 1 m innerhalb eines horizontalen Betrachterfensters von 50 cm sehen kann, beträgt das SPB in horizontaler Richtung etwa 0,5^{∗}10⁶. Dem entsprechen im CGH 500.000 steuerbare Öffnungen mit einem Abstand von 1 µm. Bei einem Aspekt-Verhältnis von 4:3 ergeben sich in vertikaler Richtung entsprechend 375.000 Öffnungen. Das CGH enthält somit 3,75^{∗}10¹¹ Öffnungen, wenn man drei Farbsubpixel berücksichtigt. Diese Zahl verdreifacht sich noch, wenn man bedenkt, dass im CGH mit steuerbaren Öffnungen meist nur Amplituden beeinflusst werden können. Die Phasenkodierung erfolgt dann über den sogenannten Detourphasen-Effekt, wofür mindestens drei äquidistante Öffnungen je Abtastpunkt erforderlich sind. SLM mit so vielen steuerbaren Öffnungen sind derzeit nicht bekannt.

Die Hologrammwerte müssen aus den zu rekonstruierenden Szenen berechnet werden. Bei einer Farbtiefe von 1 Byte für jede der drei Grundfarben und einer Frame-Rate von 50 Hz benötigt ein CGH einen Informationsfluss von 50^{∗}10¹² = 0,5^{∗}10¹⁴ Byte/s. Fouriertransformationen von Datenströmen dieser Größe übersteigen die Leistung derzeit einsetzbarer Rechner bei weitem und schließen eine Hologramm-Berechnung auf Basis lokaler Rechner aus. Aber auch eine Übertragung dieser Informationsmenge über Datennetze ist für den normalen Nutzer gegenwärtig nicht realisierbar.

Um die umfangreichen Rechenvorgänge zu verringern, wird beispielsweise auch vorgeschlagen, das Hologramm nicht vollständig zu berechnen, sondern nur in den Teilen, die direkt vom Betrachter eingesehen werden können oder die sich ändern. In der oben schon genannten Patentschrift WO 01/95016 A1 wird ein solches Hologramm beschrieben, das aus adressierbaren Subregionen besteht, wie etwa das genannte Tiling-Hologramm. Ausgangspunkt der Berechnungen ist eine sogenannte effektive Austrittspupille, die mit der Augenpupille des Betrachters in der jeweiligen Position zusammenfallen kann. Die Nachführung des Bildes bei einer Veränderung der Betrachterposition erfolgt durch ständige Neuberechnung des Hologrammteiles, der das Bild für die neue Betrachterposition erzeugt. Dadurch wird aber die Senkung des Rechenaufwandes zum Teil wieder zunichte gemacht.

Aus dem Übersichtsartikel Travis L.: "The Display of Three-Dimensional Video Images" Proceedings of the IEEE, Bd. 85, Nr. 11, 1. November 1997, Seiten 1817 bis 1832, sind stereoskopische und holographische Anzeigevorrichtungen bekannt.

Aus den Veröffentlichungen Leseberg D.: "Computer-Generated Three-Dimensional Image Holograms", Applied Optics, Bd. 31, Nr. 2, 10. Januar 1992, Seiten 223-229, und Jendral A. et al.: "Synthetic Near-Field Holograms With Localized Information", Optics Letters, Bd. 20, Nr. 10, 15. Mai 1995, Seiten 1204-1206, sind Möglichkeiten beschrieben, den Rechenaufwand für die Hologrammberechnung zu reduzieren, bei der letztgenannten Veröffentlichung für Nahfeldhologramme.

Die Nachteile der bekannten Verfahren bestehen zusammengefasst darin, dass die Anordnungen mit akusto-optischen Modulatoren zu voluminös sind und nicht auf heutige aus der Flachbildschirmtechnik bekannte Abmessungen reduziert werden können, dass die Videohologramme nach dem Tiling-Verfahren zweistufige Verfahren mit großem technologischen Aufwand sind, die sich schwerlich auf Desktop-Größe reduzieren lassen und dass schließlich die Anordnungen auf der Basis von SLM mit steuerbaren Öffnungen zu klein sind, um große Szenen rekonstruieren zu können. Dazu fehlen momentan steuerbare große SLM mit extrem kleinen Pitches sowie die erforderlichen Rechenleistungen und die erforderliche hohe Bandbreite der Netzwerke.

Der Erfindung liegt die Aufgabe zugrunde, die angeführten Nachteile zu umgehen und ausgedehnte Videodarstellungen von Hologrammen in Echtzeit und für große Betrachterwinkel zu ermöglichen.

Diese Aufgabe wird erfindungsgemäß jeweils mit den im Patentanspruch 1 und 15 aufgeführten Merkmalen gelöst. Vorteilhafte Ausgestaltungen der Erfindung sind in den Patentansprüchen 2 bis 14 und 16 angegeben.

Die erfindungsgemäßen Verfahren und Einrichtungen zur Rekonstruktion von Videohologrammen mit steuerbaren Öffnungen sehen vor, dass in der Betrachterebene mindestens ein Betrachterfenster in einem Periodizitätsintervall als direkte oder inverse Fouriertransformierte des Videohologramms gebildet wird, durch das hindurch ein Betrachter eine dreidimensionale Szene als Rekonstruktion sehen kann. Die Ausdehnung des Betrachterfensters entspricht maximal dem Periodizitätsintervall in der Ebene der Fourier-Rücktransformation am Ort des Lichtquellenbildes. Das Betrachterfenster spannt zusammen mit dem Hologramm einen Kegelstumpf auf, der die gesamte dreidimensionale Szene als Fresnel-Transformierte des Videohologramms enthält.

Das Betrachterfenster ist in Ausbildung der Erfindung in etwa auf ein Auge eines Betrachters begrenzt und positioniert. In nicht beanspruchten Ausführungsformen kann das Betrachterfenster auch auf einen Augenabstand eines Betrachters oder auf einen anderen geeigneten Bereich begrenzt und positioniert sein.

Im Rahmen der Erfindung ist vorgesehen, dass dem anderen Auge des Betrachters analog ein Betrachterfenster zugeordnet wird. Das erfolgt dadurch, dass die betrachtete Lichtquelle entsprechend versetzt oder durch Zuschalten einer zweiten reellen oder virtuellen, hinreichend kohärenten Lichtquelle an einem anderen geeigneten Ort zu einem Lichtquellenpaar im optischen System ergänzt wird. Auf diese Weise wird die beidäugige Betrachtung der dreidimensionalen Szene durch zwei zugehörige Betrachterfenster ermöglicht. Dabei kann der Inhalt des Videohologramms synchron mit dem Zuschalten des zweiten Betrachterfensters entsprechend der Augenposition geändert, d.h. umkodiert werden. Bei mehreren Betrachtern können so durch Zuschalten weiterer Lichtquellen entsprechend viele Betrachterfenster erzeugt werden.

Für die Einrichtung zur Rekonstruktion eines Videohologramms besteht ein anderer wesentlicher Erfindungsgedanke darin, das optische System und das Videohologramm so anzuordnen, dass die höheren Beugungsordnungen des Videohologramms für das erste Betrachterfenster eine Nullstelle bzw. ein Intensitätsminimum am Ort des zweiten Betrachterfensters aufweisen. Damit wird ein Übersprechen eines Betrachterfensters für ein Auge auf das andere Auge eines Betrachters oder auf andere Betrachter verhindert. Der Intensitätsabfall des Lichts zu höheren Beugungsordnungen hin aufgrund der endlichen Breite der Öffnungen des Videohologramms oder/und der Minima des Intensitätsverlaufs wird so vorteilhaft ausgenutzt. Bei zum Beispiel rechteckigen Öffnungen entsteht als Intensitätsverlauf eine sinc²-Funktion, die schnell abfällt und eine mit größer werdenden Abständen abnehmende sin²-Funktion darstellt.

Für das Videohologramm sind nur so viele Werte zu berechnen, wie das Display Öffnungen hat. Auf die gleiche Anzahl von Werten ist die Übertragung der Daten vom Computer oder vom Netz auf das Display als Hologramm beschränkt. Der Datenstrom unterscheidet sich daher praktisch nicht von dem heute schon durch die übliche Displaytechnik zu verarbeitenden Datenstrom. Das soll anhand eines Beispiels verdeutlicht werden.

Reduziert man das Betrachterfenster durch Wahl eines hinreichend grob auflösenden Displays beispielsweise von horizontal 50 cm und vertikal 37,5 cm auf 1 cm x 1 cm, so entspricht das einer Reduzierung der Anzahl der Öffnungen im Hologramm auf 1/1875. In gleicher Weise wird bei einem Transfer über ein Netzwerk die erforderliche Bandbreite reduziert. Bei den nach bekannten Verfahren hergestellten Videohologrammen mit erforderlichen 10¹² Öffnungen reduzieren sich diese im Beispiel auf etwa 5^{∗}10⁸ Pixel. Durch das verbleibende Betrachterfenster kann die Szene vollständig betrachtet werden. Diese Anforderungen an Pitch und Hologrammgrösse entsprechend dem Space-Bandwith-Produkt können heute verfügbare Displays bereits erfüllen. Damit können auf kostengünstige Weise große Echtzeit-Videohologramme auf Displays mit großem Pitch für einen großen Betrachterbereich realisiert werden.

Die Nachführung des Betrachterfensters (Tracking) wird durch mechanischen oder elektronischen Versatz der Lichtquellen, durch bewegliche Spiegel oder von auf andere geeignete Weise positionierbare Lichtquellen realisiert. Mit dem Verschieben der Lichtquellenbilder verschieben sich auch die Betrachterfenster. Bewegt sich der Betrachter, wird/werden die Lichtquelle/n so im Raum verschoben, dass die Betrachterfenster den Augen des Betrachters folgen. Dadurch wird gesichert, dass die Betrachter auch bei Bewegung die rekonstruierte dreidimensionale Szene sehen und andererseits ihre Bewegungsfreiheit nicht eingeschränkt ist. Für die Positionsdetektion der Betrachter sind verschiedene Systeme bekannt, die hier vorteilhaft einsetzbar sind, beispielsweise auf Magnetsensoren basierende.

Mit den erfindungsgemäßen Mitteln ist auch die farbige Rekonstruktion eines Videohologramms effektiv möglich. Dabei ist vorgesehen, dass die Rekonstruktion mit mindestens drei für die Grundfarben in Amplitude und/oder Phase steuerbaren Öffnungen je Zelle erfolgt, wobei die Kodierung für die Öffnungen für jede Grundfarbe separat vorgenommen wird. Eine andere Möglichkeit der farbigen Rekonstruktion eines Videohologramms besteht darin, wenigstens drei nacheinander ausgeführte Rekonstruktionen in den Grundfarben auf der Grundlage der erfindungsgemäßen Einrichtung durchzuführen.

Mit der vorliegenden Erfindung können vorteilhafterweise holografische Darstellungen von ausgedehnten räumlichen Szenen mittels steuerbarer Displays, wie TFT-Flachdisplays, in Echtzeit und für große Betrachterwinkel erzeugt werden. Diese Videohologramme sind vorteilhafterweise im Fernseh-, Multimedia-, Spiele- und Konstruktionsbereich, in der Militär- und in der Medizintechnik und in anderen Bereichen von Wirtschaft und Gesellschaft anwendbar. Die dreidimensionalen Szenen können computergeneriert oder auf andere Weise erzeugt werden.

Ein Ausführungsbeispiel der Erfindung ist in den Zeichnungen dargestellt und wird im Folgenden näher beschrieben.

Es zeigen
- Fig. 1: eine prinzipielle Darstellung eines Videohologramms und einer Einrichtung zur Rekonstruktion von Videohologrammen mit der Entstehung der Beugungsordnungen und der Lage eines Betrachterfensters,
- Fig. 2: eine prinzipielle Darstellung einer Einrichtung zur Rekonstruktion von Videohologrammen mit einer dreidimensionalen Szene, die durch ein Betrachterfenster hindurch betrachtet werden kann,
- Fig. 3: eine prinzipielle Darstellung einer Einrichtung zur Rekonstruktion von Videohologrammen mit der Kodierung der dreidimensionalen Szene in einem Teil des Videohologramms, so dass die Beugungsordnungen nicht überlappen,
- Fig. 4: einen Intensitätsverlauf des Lichtes in der Betrachterebene in Abhängigkeit von den Beugungsordnungen und
- Fig. 5: eine prinzipielle Darstellung einer Einrichtung zur Rekonstruktion von Videohologrammen mit der Lage der Betrachterfenster für beide Augen eines Betrachters hinsichtlich der Beugungsordnungen zur Vermeidung von Übersprechen.

Eine Einrichtung zur Rekonstruktion von Videohologrammen besteht aus dem Videohologramm, einer hinreichend kohärenten reellen punkt- oder linienförmigen Lichtquelle und aus einem optischen System. Das Videohologramm selbst setzt sich aus matrixförmig oder in anderer Weise regulär angeordneten Zellen zusammen, die mindestens eine in Amplitude und/oder Phase steuerbare Öffnung je Zelle enthalten. Das optische System zur Rekonstruktion des Videohologramms lässt sich in bekannter Weise z.B. einfach durch ein optisches Abbildungssystem, bestehend aus einem punkt- oder linienförmigen Laser und einer hinreichend kohärenten Lichtquelle realisieren.

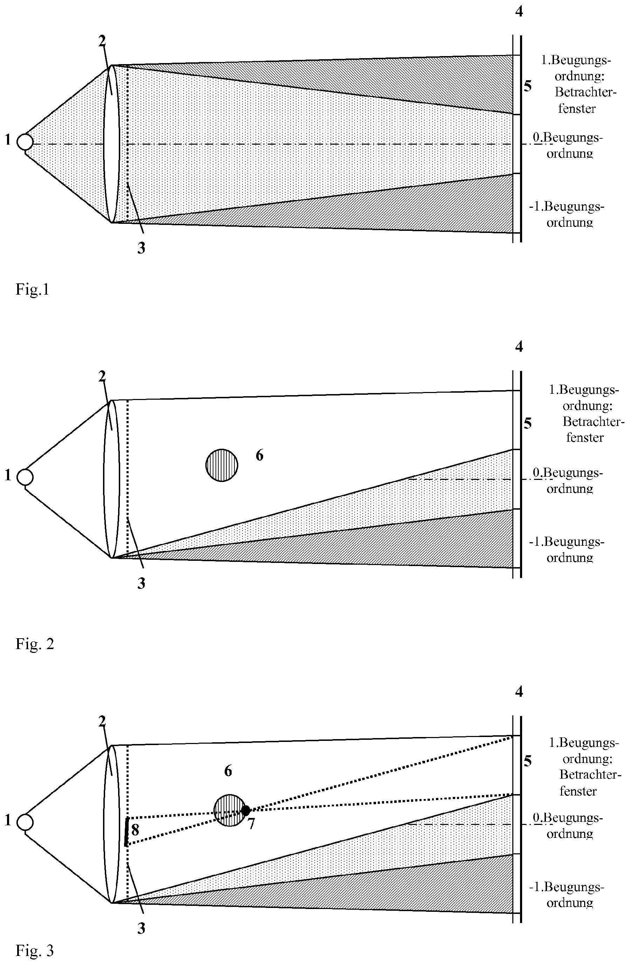

Die grundsätzliche Anordnung von Videohologramm und Rekonstruktion zeigt Fig. 1. In Lichtrichtung sind hintereinander eine Lichtquelle 1, eine Linse 2, ein Hologramm 3 und eine Betrachterebene 4 angeordnet. Der Betrachterebene 4 entspricht die Fourierebene der Rücktransformation des Videohologramms mit den Beugungsordnungen.

Die Lichtquelle 1 wird durch ein optisches System, repräsentiert durch die Linse 2, in die Betrachterebene 4 abgebildet. Setzt man ein Hologramm 3 ein, so wird es in der Betrachterebene 4 als Fourier-Rücktransformation dargestellt. Das Hologramm 3 mit periodischen Öffnungen erzeugt äquidistant fortgesetzte Beugungsordnungen in der Betrachterebene 4, wobei die holografische Kodierung, beispielsweise mittels des sogenannten Detourphasen-Effektes, in die höheren Beugungsordnungen erfolgt. Da die Intensität nach höheren Beugungsordnungen hin abnimmt, wird in der Regel die 1. oder die -1. Beugungsordnung als Betrachterfenster 5 gewählt. Wenn nicht ausdrücklich anders angegeben, wird zur Darlegung der Erfindung im Weiteren von der 1. Beugungsordnung ausgegangen.

Die Ausdehnung der Rekonstruktion wurde hier so gewählt, dass sie in ihrer Größe mit dem Periodizitätsintervall der 1. Beugungsordnung in der Betrachterebene 4 übereinstimmt. Somit schließen sich höhere Beugungsordnungen ohne Lücke, aber auch ohne Überlappung aneinander an.

Die ausgewählte 1. Beugungsordnung bildet zwar als Fouriertransformierte die Rekonstruierte des Hologramms 3, stellt aber nicht die eigentliche dreidimensionale Szene 6 dar. Sie dient nur als Betrachterfenster 5, durch das hindurch die dreidimensionale Szene 6 betrachtet werden kann (s. Fig. 2). Im Inneren des Lichtbündels der 1. Beugungsordnung ist die eigentliche dreidimensionale Szene 6 in Form eines Kreises angedeutet. Die Szene liegt also innerhalb des Rekonstruktionskegels, der vom Hologramm 3 und dem Betrachterfenster 5 aufgespannt wird. Die Szene entsteht als Fresnel-Transformierte des Hologramms, während das Betrachterfenster ein Teil der Fourier-Transformierten ist.

Die Fig. 3 zeigt dazu die holografische Kodierung. Die dreidimensionale Szene ist aus Punkten aufgebaut. Mit dem Betrachterfenster 5 als Basis und dem ausgewählten Punkt 7 in der Szene 6 als Spitze wird ein Kegel durch diesen Punkt hindurch verlängert auf das Hologramm 3 projiziert. Es entsteht ein Projektionsgebiet 8 im Videohologramm 3, in dem dieser Punkt holografisch kodiert wird. Zur Berechnung der Phasenwerte kann man die Weglängen vom betrachteten Punkt 7 zu den Zellen des Hologramms 3 bestimmen. Mit dieser Rekonstruktion wird die Größe des Betrachterfensters 5 im Periodizitätsintervall eingehalten. Würde im Beispiel dagegen der betrachtete Punkt 7 im gesamten Hologramm 3 kodiert, wäre die Rekonstruierte über das Periodizitätsintervall hinaus ausgedehnt. Die Betrachterzonen aus benachbarten Beugungsordnungen würden sich überlappen, wobei der Betrachter eine periodische Fortsetzung des betrachteten Punktes 7 sehen würde. Eine so kodierte Oberfläche würde durch Mehrfachüberlagerungen in ihren Konturen verwaschen erscheinen.

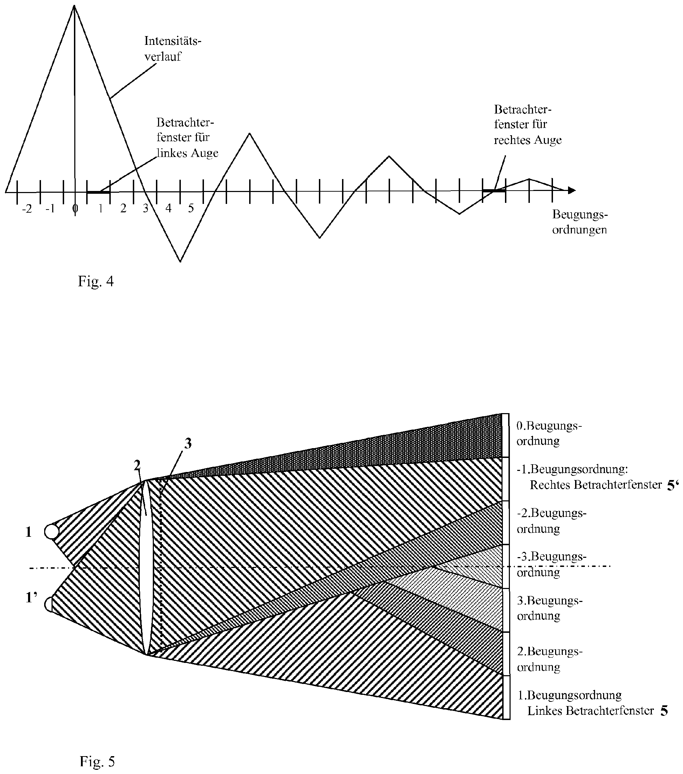

Vorteilhafterweise wird der Intensitätsabfall zu höheren Beugungsordnungen hin zur Unterdrückung des Übersprechens auf andere Betrachterfenster genutzt. Die Fig. 4 zeigt dazu schematisch einen Intensitätsverlauf des Lichts über die Beugungsordnungen, der durch die Breite der Öffnungen im CGH entsteht. Auf der Abszisse sind die Beugungsordnungen aufgetragen. Die 1. Beugungsordnung stellt das Betrachterfenster 5 für das linke Auge, also das linke Betrachterfenster, dar, durch das die dreidimensionale Szene 6 betrachtet werden kann. Das Übersprechen in ein Betrachterfenster für das rechte Auge wird durch den Abfall der Intensität zu höheren Ordnungen und zusätzlich noch durch die Nullstelle der Intensitätsverteilung unterdrückt.

Der Betrachter kann die Szene 6 des Hologramms 3 natürlich auch mit beiden Augen betrachten (s. Fig. 5). Für das rechte Auge wurde als rechtes Betrachterfenster 5' die -1. Beugungsordnung zur Lichtquelle 1' gewählt. Wie aus der Zeichnung ersichtlich ist, spricht diese Intensität nur mit einem sehr geringen Wert auf das linke Auge über. Er entspricht hier der -6. Beugungsordnung.

Für das linke Auge wurde die 1. Beugungsordnung entsprechend der Lage der Lichtquelle 1 gewählt. Dort entsteht analog das linke Betrachtungsfenster 5. Erfindungsgemäß werden mit den zwei Lichtquellen 1 und 1' die entsprechenden dreidimensionalen Szenen 6 und 6' (hier nicht gezeigt) ortsfest bezüglich der Augen dargestellt. Dazu wird das Hologramm 3 beim Zuschalten der Lichtquellen 1 und 1' jeweils neu kodiert. Alternativ können die beiden Lichtquellen 1 und 1' gleichzeitig das Hologramm 3 an den beiden Betrachterfenstern 5 und 5' rekonstruieren.

Bewegt sich der Betrachter, werden die Lichtquellen 1 und 1' so nachgeführt, dass die beiden Betrachterfenster 5 und 5' auf den Augen des Betrachters lokalisiert bleiben. Dies gilt auch bei Bewegungen in der Normalen, also senkrecht zum Videohologramm.
Weiterhin können auch mehrere Betrachter eine dreidimensionale Szene betrachten, indem durch Zuschalten weiterer Lichtquellen zusätzliche Betrachterfenster entstehen.

## Patentansprüche

1. Einrichtung zur Rekonstruktion einer aus einzelnen Punkten aufgebauten dreidimensionalen Szene mit einem optischen System, enthaltend mindestens eine reelle punkt- oder linienförmige, hinreichend kohärente Lichtquelle (1) und eine Linse (2), sowie mit einem steuerbaren Display (3) aus matrixförmig oder in anderer Weise regulär angeordneten Zellen mit mindestens einer in Amplitude und/oder Phase steuerbaren Öffnung je Zelle, wobei in Lichtrichtung hintereinander die Lichtquelle (1), die Linse (2), und das steuerbare Display (3) angeordnet sind, wobei in das steuerbare Display (3) ein Videohologramm kodierbar ist und wobei die Linse (2) ein Bild der Lichtquelle (1) in einer Betrachterebene (4) erzeugt, wobei ferner gilt, dass ein Betrachterfenster (5) in der Betrachterebene (4) innerhalb einer Beugungsordnung des steuerbaren Displays (3) positioniert ist, dass durch das Betrachterfenster (5) hindurch die dreidimensionale Szene (6) betrachtbar ist, wenn ein Auge eines Betrachters an dem Betrachterfenster (5) positioniert ist, dass ein Computer der Einrichtung ausgebildet ist, ein Projektionsgebiet (8) mittels einer Projektion vom Betrachterfenster (5) als Basis durch einen ausgewählten Punkt (7) der dreidimensionalen Szene (6) hindurch zum steuerbaren Display (3) zu bilden und zur Darstellung des ausgewählten Punkts (7) das Videohologramm in dem Projektionsgebiet (8) des steuerbaren Displays (3) zu kodieren und dass dieses Projektionsgebiet (8) das einzige Gebiet ist, in welchem das Videohologramm für den ausgewählten Punkt (7) kodiert ist, dass das Betrachterfenster (5) in etwa auf ein Auge eines Betrachters begrenzt und positioniert ist, dass die Position des Betrachterfensters (5; 5') änderbar ist und dass das Betrachterfenster (5; 5') dem Auge des Betrachters so nachführbar ist, dass der Betrachter auch beim Bewegen seines Kopfes weiterhin durch das Betrachterfenster (5; 5') blicken kann.

2. Einrichtung nach Patentanspruch 1, **dadurch gekennzeichnet, dass** die Einrichtung ausgebildet ist, die holografische Rekonstruktion der dreidimensionalen Szene durch eine Fresneltransformation zu erzeugen, während das Betrachterfenster ein Teil der Fouriertransformation ist.

3. Einrichtung nach Patentanspruch 2, **dadurch gekennzeichnet, dass** die Einrichtung ausgebildet ist, eine direkte oder inverse Fouriertransformation des Videohologramms mit dem steuerbaren Display (3) in der Betrachterebene (4) zu erzeugen.

4. Einrichtung nach Patentanspruch 1, **dadurch gekennzeichnet, dass** das Betrachterfenster (5) etwa 1 cm x 1 cm groß ist.

5. Einrichtung nach Patentanspruch 1, **dadurch gekennzeichnet, dass** die Einrichtung ausgebildet ist, für das andere Auge des Betrachters ein zweites Betrachterfenster (5') in der Betrachterebene (4) durch ein Versetzen der Lichtquelle (1) zu erzeugen.

6. Einrichtung nach Patentanspruch 1, **dadurch gekennzeichnet, dass** ein zweites Betrachterfenster (5') erzeugt wird, indem eine zweite reelle, hinreichend kohärente Lichtquelle (1') an einem anderen geeigneten Ort zu einem Lichtquellenpaar (1, 1') im optischen System zugeschaltet wird.

7. Einrichtung nach Patentanspruch 6, **dadurch gekennzeichnet, dass** ein Nachführen der Positionen von Betrachterfenstern (5, 5'), welche auf die Augen des Betrachters positioniert sind, durch mechanisches oder elektronischen Verschieben der Lichtquellen (1, 1') mit einem Mittel zum Nachführen erfolgt.

8. Einrichtung nach Patentanspruch 6, **dadurch gekennzeichnet, dass** die Lichtquellen durch mechanischen oder elektronischen Versatz oder durch bewegliche Spiegel positionierbar sind.

9. Einrichtung nach Patentanspruch 5, 6, 7 oder 8, **gekennzeichnet durch** wenigstens einen Positionsgeber, der eine Information zur Bestimmung der Position der Lichtquellen in Abhängigkeit von der Position des Betrachters oder der Betrachter liefert.

10. Einrichtung nach Patentanspruch 1, **dadurch gekennzeichnet, dass** für mehrere Betrachter mehrere Lichtquellen zuschaltbar sind.

11. Einrichtung nach Patentanspruch 1, **dadurch gekennzeichnet, dass** eine farbige Rekonstruktion eines Videohologramms mit einem steuerbaren Display (3) aus matrixförmig oder regulär angeordneten Zellen mit mindestens drei für die Grundfarben in Amplitude und/oder Phase steuerbaren Öffnungen je Zelle erfolgt, wobei die Kodierung für die Öffnungen für jede Grundfarbe separat erfolgt.

12. Einrichtung nach Patentanspruch 1, **dadurch gekennzeichnet, dass** eine farbige Rekonstruktion durch wenigstens drei nacheinander ausgeführte Rekonstruktionen in den Grundfarben erfolgt.

13. Einrichtung nach Patentanspruch 1, **dadurch gekennzeichnet, dass** das steuerbare Display (3) ein TFT-Display ist.

14. Einrichtung nach Patentanspruch 5 oder 6, **dadurch gekennzeichnet, dass** das optische System und das steuerbare Display (3) so angeordnet sind, dass höhere Beugungsordnungen des steuerbaren Displays (3) für das erste Betrachterfenster (5) eine Nullstelle oder ein Intensitätsminimum am Ort des zweiten Betrachterfensters (5') aufweisen.

15. Verfahren zur Rekonstruktion einer aus einzelnen Punkten aufgebauten dreidimensionalen Szene (6) zum Betreiben einer Einrichtung, wobei die Einrichtung ein optisches System, enthaltend mindestens eine reelle punkt- oder linienförmige, hinreichend kohärente Lichtquelle (1) und eine Linse (2), sowie ein steuerbares Display (3) aus matrixförmig oder in anderer Weise regulär angeordneten Zellen mit mindestens einer in Amplitude und/oder Phase steuerbaren Öffnung je Zelle enthält, wobei in das steuerbare Display (3) ein Videohologramm kodiert wird und wobei die Linse (2) ein Bild der Lichtquelle (1) in einer Betrachterebene (4) erzeugt, wobei ferner gilt, dass ein Betrachterfenster (5) in der Betrachterebene (4) innerhalb einer Beugungsordnung des steuerbaren Displays (3) positioniert ist, dass durch das Betrachterfenster (5) hindurch die dreidimensionale Szene (6) betrachtbar ist, wenn ein Auge eines Betrachters an dem Betrachterfenster (5) positioniert ist, dass ein Projektionsgebiet (8) mittels einer Projektion vom Betrachterfenster (5) als Basis durch einen ausgewählten Punkt (7) der dreidimensionalen Szene (6) hindurch zum steuerbaren Display (3) gebildet wird, dass das Videohologramm in dem Projektionsgebiet (8) des steuerbaren Displays (3) kodiert wird und dass dieses Projektionsgebiet (8) das einzige Gebiet ist, in welchem das Videohologramm für den ausgewählten Punkt (7) kodiert ist, dass das Betrachterfenster (5) in etwa auf ein Auge eines Betrachters begrenzt und positioniert ist, dass die Position des Betrachterfensters (5; 5') änderbar ist, und dass das Betrachterfenster (5; 5') dem Auge des Betrachters so nachführbar ist, dass der Betrachter auch beim Bewegen seines Kopfes weiterhin durch das Betrachterfenster (5; 5') blicken kann.

16. Verfahren nach Anspruch 15 zum Betreiben einer Einrichtung nach einem der Ansprüche 1 bis 14.

## Claims

1. Device for reconstructing a three-dimensional scene built from individual points with an optical system, comprising at least one real point-shaped or line-shaped, sufficiently coherent light source (1) and a lens (2), and with a controllable display (3) made of matrix-type cells or cells of another regular arrangement with at least one opening per cell, said opening being controllable in amplitude and/or phase, wherein, in the light direction, the light source (1), the lens (2) and the controllable display (3) are arranged in succession, wherein a video hologram is codable into the controllable display (3) and wherein the lens (2) generates an image of the light source (1) in an observer plane (4), wherein furthermore it is the case
that an observer window (5) is positioned in the observer plane (4) within a diffraction order of the controllable display (3), that the three-dimensional scene (6) is observable through the observer window (5) when an eye of an observer is positioned by the observer window (5), that a computer of the device is configured to form a projection region (8) by a projection from the observer window (5) as a base through a selected point (7) of the three-dimensional scene (6) to the controllable display (3) and to code the video hologram in the projection region (8) of the controllable display (3) for representing the selected point (7) and that this projection region (8) is the only region in which the video hologram is coded for the selected point (7), that the observer window (5) is limited and positioned approximately on an eye of an observer, that the position of the observer window (5, 5') is variable and that the observer window (5, 5') is trackable to the eye of the observer such that the observer can continue to look through the observer window (5, 5') even when moving his head.

2. Device according to Claim 1, **characterized in that** the device is adapted to generate the holographic reconstruction of the three-dimensional scene through a Fresnel transform, while the observer window is part of the Fourier transform.

3. Device according to Claim 2, **characterized in that** the device is adapted to generate a direct or inverse Fourier transform of the video hologram with the controllable display (3) in the observer plane (4).

4. Device according to Claim 1, **characterized in that** the size of the observer window (5) is approximately 1 cm x 1 cm.

5. Device according to Claim 1, **characterized in that** the device is adapted to generate a second observer window (5') in the observer plane (4) for the other eye of the observer by moving the light source (1).

6. Device according to Claim 1, **characterized in that** a second observer window (5') is generated by turning on a second real, sufficiently coherent light source (1') at a different suitable location to form a light source pair (1, 1') in the optical system.

7. Device according to Claim 6, **characterized in that** a tracking of the positions of observer windows (5, 5') which are positioned to the eyes of the observer is achieved by mechanically or electronically displacing the light sources (1, 1') using a means for tracking.

8. Device according to Claim 6, **characterized in that** the light sources are positionable by mechanically or electronically moving them or by way of movable mirrors.

9. Device according to Claim 5, 6, 7 or 8, **characterized by** at least one position encoder, which provides a piece of information for the determination of the position of the light sources in dependence on the position of the observer or of the observers.

10. Device according to Claim 1, **characterized in that** a plurality of light sources can be turned on for a plurality of observers.

11. Device according to Claim 1, **characterized in that** a coloured reconstruction of a video hologram is effected with a controllable display (3) made of matrix-type cells or cells of a regular arrangement with at least three openings per cell, said openings being controllable for the primary colours in amplitude and/or phase, wherein the coding for the openings is done separately for each primary colour.

12. Device according to Claim 1, **characterized in that** a coloured reconstruction is effected by way of at least three successively performed reconstructions in the primary colours.

13. Device according to Claim 1, **characterized in that** the controllable display (3) is a TFT display.

14. Device according to Claim 5 or 6, **characterized in that** the optical system and the controllable display (3) are arranged such that higher diffraction orders of the controllable display (3) have a zero position for the first observer window (5) or an intensity minimum at the location of the second observer window (5').

15. Method for reconstructing a three-dimensional scene (6) built from individual points for operating a device, wherein the device includes an optical system, comprising at least one real point-shaped or line-shaped, sufficiently coherent light source (1) and a lens (2), and a controllable display (3) made of matrix-type cells or cells of another regular arrangement with at least one opening per cell, said opening being controllable in amplitude and/or phase, wherein a video hologram is coded into the controllable display (3) and wherein the lens (2) generates an image of the light source (1) in an observer plane (4), wherein furthermore it is the case that an observer window (5) is positioned in the observer plane (4) within a diffraction order of the controllable display (3), that the three-dimensional scene (6) is observable through the observer window (5) when an eye of an observer is positioned by the observer window (5), that a projection region (8) is formed by a projection from the observer window (5) as a base through a selected point (7) of the three-dimensional scene (6) to the controllable display (3), that the video hologram is coded in the projection region (8) of the controllable display (3) and that this projection region (8) is the only region in which the video hologram is coded for the selected point (7), that the observer window (5) is limited and positioned to approximately an eye of an observer, that the position of the observer window (5, 5') is variable and that the observer window (5, 5') is trackable to the eye of the observer such that the observer can continue to look through the observer window (5, 5') even when moving his head.

16. Method according to Claim 15 for operating a device according to one of Claims 1 to 14.

## Revendications

1. Dispositif de reconstruction d'une scène tridimensionnelle construite à partir de points individuels avec un système optique, contenant au moins une source de lumière (1) suffisamment cohérente réelle ponctuelle ou linéaire et une lentille (2), et comprenant aussi un afficheur commandable (3) constitué de cellules matricielles ou distribuées régulièrement d'une autre manière avec au moins une ouverture commandable en amplitude et/ou en phase par cellule, la source de lumière (1), la lentille (2) et l'afficheur commandable (3) étant disposés les uns derrière les autres dans la direction de la lumière, un hologramme vidéo pouvant être codé dans l'afficheur commandable (3) et la lentille (2) générant une image de la source de lumière (1) dans un plan d'observateur (4), en outre **caractérisé en ce qu'**une fenêtre d'observateur (5) est positionnée dans le plan d'observateur (4) à l'intérieur d'un ordre de diffraction de l'afficheur commandable (3), **en ce que** la scène tridimensionnelle (6) peut être observée à travers la fenêtre d'observateur (5) lorsqu'un œil d'un observateur est positionné au niveau de la fenêtre d'observateur (5), **en ce qu'**un ordinateur du dispositif est configuré pour former une région de projection (8) au moyen d'une projection de la fenêtre d'observateur (5) en tant que base à travers un point (7) sélectionné de la scène tridimensionnelle (6) vers l'afficheur commandable (3) et, en vue de représenter le point (7) sélectionné, coder l'hologramme vidéo dans la région de projection (8) de l'afficheur commandable (3) et **en ce que** cette région de projection (8) est la seule région dans laquelle l'hologramme vidéo est codé pour le point (7) sélectionné, **en ce que** la fenêtre d'observateur (5) est limitée et positionnée approximativement à un œil d'un observateur, **en ce que** la position de la fenêtre d'observateur (5 ; 5') est modifiable et **en ce que** la fenêtre d'observateur (5 ; 5') peut être asservie à l'œil de l'observateur de telle sorte que l'observateur peut continuer de regarder à travers la fenêtre d'observateur (5 ; 5'), même lors d'un mouvement de sa tête.

2. Dispositif selon la revendication 1, **caractérisé en ce que** le dispositif est configuré pour générer la reconstruction holographique de la scène tridimensionnelle par une transformée de Fresnel, alors que la fenêtre d'observateur est une partie d'une transformée de Fourier.

3. Dispositif selon la revendication 2, **caractérisé en ce que** le dispositif est configuré pour générer une transformée de Fourier directe ou inverse de l'hologramme vidéo avec l'afficheur commandable (3) dans le plan d'observateur (4).

4. Dispositif selon la revendication 1, **caractérisé en ce que** la fenêtre d'observateur (5) a une taille d'environ 1 cm x 1 cm.

5. Dispositif selon la revendication 1, **caractérisé en ce que** le dispositif est configuré pour générer, pour l'autre œil de l'observateur, une deuxième fenêtre d'observateur (5') dans le plan d'observateur (4) par un décalage de la source de lumière (1).

6. Dispositif selon la revendication 1, **caractérisé en ce qu'**une deuxième fenêtre d'observateur (5') est générée en mettent en circuit dans le système optique une deuxième source de lumière (1') suffisamment cohérente réelle à un autre endroit approprié pour former une paire de sources de lumière (1, 1').

7. Dispositif selon la revendication 6, **caractérisé en ce qu'**un asservissement des positions des fenêtres d'observateur (5, 5') qui sont positionnées sur les yeux de l'observateur est effectuée par déplacement mécanique ou électronique des sources de lumière (1, 1') avec un moyen servant à l'asservissement.

8. Dispositif selon la revendication 6, **caractérisé en ce que** les sources de lumière peuvent être positionnées par décalage mécanique ou électronique ou par des miroirs mobiles.

9. Dispositif selon la revendication 5, 6, 7 ou 8, **caractérisé par** au moins un transmetteur de position qui délivre une information destinée à déterminer la position des sources de lumière en fonction de la position de l'observateur ou des observateurs.

10. Dispositif selon la revendication 1, **caractérisé en ce que** plusieurs sources de lumière peuvent être mises en circuit pour plusieurs observateurs.

11. Dispositif selon la revendication 1, **caractérisé en ce qu'**une reconstruction en couleur d'un hologramme vidéo avec est effectuée avec un afficheur commandable (3) constitué de cellules matricielles ou distribuées régulièrement avec au moins trois ouvertures commandables en amplitude et/ou en phase par cellule pour les couleurs primaires, le codage pour les ouvertures s'effectuant séparément pour chaque couleur primaire.

12. Dispositif selon la revendication 1, **caractérisé en ce qu'**une reconstruction en couleur est effectuée par au moins trois reconstructions dans les couleurs primaires réalisées les unes après les autres.

13. Dispositif selon la revendication 1, **caractérisé en ce que** l'afficheur commandable (3) est un afficheur TFT.

14. Dispositif selon la revendication 5 ou 6, **caractérisé en ce que** le système optique et l'afficheur commandable (3) sont disposés de telle sorte que les ordres de diffraction les plus élevés de l'afficheur commandable (3) pour la première fenêtre d'observateur (5) présentent un point zéro ou un minimal d'intensité à l'endroit de la deuxième fenêtre d'observateur (5').

15. Procédé de reconstruction d'une scène tridimensionnelle (6) construite à partir de points individuels en vue de faire fonctionner un dispositif, le dispositif comprenant un système optique, contenant au moins une source de lumière (1) suffisamment cohérente réelle ponctuelle ou linéaire et une lentille (2), ainsi qu'un afficheur commandable (3) constitué de cellules matricielles ou distribuées régulièrement d'une autre manière avec au moins une ouverture commandable en amplitude et/ou en phase par cellule, un hologramme vidéo étant codé dans l'afficheur commandable (3) et la lentille (2) générant une image de la source de lumière (1) dans un plan d'observateur (4), en outre **caractérisé en ce qu'**une fenêtre d'observateur (5) est positionnée dans le plan d'observateur (4) à l'intérieur d'un ordre de diffraction de l'afficheur commandable (3), **en ce que** la scène tridimensionnelle (6) peut être observée à travers la fenêtre d'observateur (5) lorsqu'un œil d'un observateur est positionné au niveau de la fenêtre d'observateur (5), **en ce qu'**une région de projection (8) est formée au moyen d'une projection de la fenêtre d'observateur (5) en tant que base à travers un point (7) sélectionné de la scène tridimensionnelle (6) vers l'afficheur commandable (3), **en ce que** l'hologramme vidéo est codé dans la région de projection (8) de l'afficheur commandable (3) et **en ce que** cette région de projection (8) est la seule région dans laquelle l'hologramme vidéo est codé pour le point (7) sélectionné, **en ce que** la fenêtre d'observateur (5) est limitée et positionnée approximativement à un œil d'un observateur, **en ce que** la position de la fenêtre d'observateur (5 ; 5') est modifiable et **en ce que** la fenêtre d'observateur (5 ; 5') peut être asservie à l'œil de l'observateur de telle sorte que l'observateur peut continuer de regarder à travers la fenêtre d'observateur (5 ; 5'), même lors d'un mouvement de sa tête.

16. Procédé selon la revendication 15 pour faire fonctionner un dispositif selon l'une des revendications 1 à 14.
